# EUROPÄISCHE PATENTSCHRIFT

(11) **EP 1 057 701 B1**
(45) Veröffentlichungstag und Bekanntmachung des Hinweises auf die Patenterteilung: **06.12.2006**
(21) Anmeldenummer: 00110348.0
(22) Anmeldetag: 15.05.2000
(51) Int. Cl.: B60R 25/02

(54) **Vorrichtung zur Verriegelung der Lenkspindel einer Kraftfahrzeug-Lenkeinrichtung**
Steering column locking device for a vehicle steering
Dispositif de verrouillage de la colonne de direction d'un véhicule

(30) Priorität: 29.05.1999 DE 19924835
(43) Veröffentlichungstag der Anmeldung: 06.12.2000
(73) Patentinhaber: Valeo Deutschland GmbH & Co. Sicherheitssysteme, 85253 Erdweg (DE)
(72) Erfinder: Engelmann, Joachim, 40878 Ratingen (DE); Gratzl, Peter Andreas, 85253 Erdweg (DE); Friedrich, Hagen, 85229 Markt Indersdorf (DE)
(74) Vertreter: Podszus, Burghart

(56) Entgegenhaltungen:
- EP-A- 1 044 857
- DE-A- 19 704 062
- DE-C- 19 809 295
- US-A- 4 638 882
- US-A- 5 682 134

## Beschreibung

Die Erfindung betrifft eine Vorrichtung zur Verriegelung der Lenkspindel einer Kraftfahrzeug-Lenkeinrichtung mit einer im Bereich der Lenkspindel angeordneten Verriegelungseinrichtung und einer mit dieser elektrisch verbundenen zentralen Steuervorrichtung.

Eine derartige Vorrichtung wird beispielsweise in der nicht vorveröffentlichten deutschen Patentanmeldung Nr.: 199 06 267.6 beschrieben. Die Verriegelungseinrichtung umfaßt dabei einen elektrischen Stellantrieb zur Verschiebung eines Sperrelementes von seiner Ver- in seine Entriegelungsstellung und umgekehrt sowie einen Sensor zur Lageüberwachung des Sperrelementes bzw. eines das Sperrelement sichernden Sicherungselementes. In der Verriegelungsstellung greift das Sperrelement in die durch benachbarte Zähne gebildete Ausnehmung eines an der Lenkspindel befestigten Zahnkranzes ein und blockiert damit die Lenkspindel.

Sowohl zur Ansteuerung des Stellantriebes als auch zur Auswertung der von dem Sensor erzeugten Meßsignale weist die in der Patentanmeldung 199 06 267.6 beschriebene Verriegelungseinrichtung eine elektronische Schaltungsvorrichtung auf, die über entsprechende elektrische Leitungen mit der zentralen Steuervorrichtung des Fahrzeuges verbunden ist. Über die Ansteuerung der Verriegelungseinrichtung mit Hilfe der zentralen Steuervorrichtung lassen sich dieser Patentanmeldung keine näheren Angaben entnehmen.

In der Praxis hat es sich als vorteilhaft erwiesen, wenn während der Fahrt des entsprechenden Kraftfahrzeuges das Sperrelement nicht lediglich in seiner Entriegelungsstellung z.B. durch ein federbeaufschlagtes Sicherungselement gehalten wird, sondern wenn zusätzlich

Aus der DE 197 04 062 A1 ist ferner eine Vorrichtung zur Verriegelung der Lenkspindel einer Kraftfahrzeug-Lenkeinrichtung bekannt, bei welcher das Sperrelement elektromagnetisch betätigbar ist. Dabei besteht der Elektromagnet aus einer bestrombaren Spule mit dem Sperrelement als Anker. Um die jeweilige Lage des Sperrelementes zu überwachen, schlägt diese Druckschrift vor, die Induktivität der Spulen der Elektromagnete mittels einer zentralen Steuervorrichtung zu bestimmen, wobei die entsprechenden elektrischen Werte der Spule mit Hilfe einer der Verriegelungseinrichtung direkt zugeordneten Schaltungseinrichtung ermittelt werden.

Nachteilig bei dieser bekannten Vorrichtung ist unter anderem, daß zur Lageüberwachung des Sperrelementes das entsprechende elektrische Stellglied (d.h. die Spule) ständig mit Strom beaufschlagt sein muß, um die Induktivität der Spule messen zu können. Außerdem erfolgt bei der Bestromung des elektrischen Stellgliedes zur Verschiebung des Sperrelementes die Lageüberwachung des Sperrelementes durch die zentrale Steuervorrichtung. Bei einem in der zentralen Steuervorrichtung auftretenden Fehler ist daher eine Lageüberwachung des Sperrelementes bei bestromtem Stellglied nicht sichergestellt.

Der Erfindung liegt die Aufgabe zugrunde, eine Vorrichtung der eingangs erwähnten Art anzugeben, mittels welcher eine Zustandsüberwachung mit dem in der Verriegelungseinrichtung angeordneten Sensor auch während der Fahrt des Fahrzeuges möglich ist, ohne daß dadurch eine Erhöhung des Sicherheitsrisikos für den Fahrer des entsprechenden Fahrzeuges eintritt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, daß der Sensor nicht nur mit der elektronischen Schaltungseinrichtung der Verriegelungseinrichtung, sondern zusätzlich auch mit der zentralen Steuervorrichtung verbunden ist, derart, daß die Steuervorrichtung bei einem Abschalten der Versorgungsspannung für die Verriegelungseinrichtung den von dem Sensor detektierbaren Zustand der Verriegelungseinrichtung abfragen und auswerten kann.

Vorteilhafterweise handelt es sich bei dem Sensor um einen Lagesensor (z.B. einen Hallsensor), der die Lage des Sperrelementes und/oder eines das Sperrelement sichernden Sicherungselementes überwacht.

Bei dem elektrischen Stellglied kann es sich sowohl um einen Elektromotor mit nachgeschaltetem Getriebe als auch um einen Hubmagneten handeln, der mit dem Sperrelement verbunden ist bzw. dessen verschiebbarer Stößel das Sperrelement bildet.

Ein weiterer Vorteil der Verwendung eines derartigen zusätzlich auch mit der zentralen Steuervorrichtung verbindbaren Zustandssensors besteht darin, daß auf einfache Weise die Funktion der Verriegelungseinrichtung überprüft werden kann. Hierzu werden mittels der zentralen Steuervorrichtung Prüfsignale erzeugt und dem Zustandssensor über die zusätzliche Leitung zugeführt (z.B. wird im Falle eines Hallsensors ein definierter Strom eingestellt bzw. der Versorgungsstrom des Hallsensors abgeschaltet). Anschließend werden dann diese künstlich erzeugten Sensorsignale mit der elektronischen Schaltungseinrichtung der Verriegelungseinrichtung bzw. der nachgeschalteten zentralen Steuervorrichtung ausgewertet (Prüfschleife).

Weitere Einzelheiten und Vorteile der Erfindung ergeben sich aus dem folgenden anhand einer Figur erläuterten Ausführungsbeispiel.

In der Fig. ist mit 1 eine erfindungsgemäße Vorrichtung zur Verriegelung der Lenkspindel 2 einer nicht im einzelnen dargestellten Kraftfahrzeug-Lenkeinrichtung bezeichnet. Die Lenkspindel 2 trägt einen Zahnkranz 3. Die Vorrichtung 1 umfaßt eine im Bereich der Lenkspindel 2 angeordnete Verriegelungseinrichtung 4 und eine mit dieser elektrisch verbundene, aber räumlich beabstandete zentrale Steuervorrichtung 5.

Die Verriegelungseinrichtung 4 besteht im wesentlichen aus einem elektrischen Stellglied 6 zur Verschiebung eines von seiner Entriegelungsstellung in seine Verriegelungsstellung verschiebbar angeordneten Sperrelementes 7, einem Lagesensor 8 (z.B. einem Hallsensor) zur Überwachung der Lage des Sperrelementes 7 und einer elektronischen Schaltungseinrichtung 9, die sowohl mit dem elektrischen Stellglied 6 als auch mit dem Lagesensor 8 über elektrische Leitungen 10, 11 verbunden ist. Bei dem elektrischen Stellglied 6 handelt es sich um einen Elektromotor mit nachgeschaltetem Getriebe.

Die elektronische Schaltungseinrichtung 9 umfaßt eine Interfacekarte 12, welche über einen Mikrocontroller 13 mit dem Stellglied verbunden ist. Der Mikrocontroller 13 erzeugt aus entsprechenden von der zentralen Steuervorrichtung 5 übermittelten kodierten Signalen nicht nur die Steuersignale für den Elektromotor des Stellgliedes 6, sondern verarbeitet ebenfalls die von dem Lagesensor 8 kommenden Signale.

Die elektronische Schaltungseinrichtung 9 enthält ferner eine Stromversorgungseinheit 14, die die Baugruppen 12 und 13 mit Strom versorgt und ihrerseits über eine elektrische Leitung 15 und ein der zentralen Steuervorrichtung 5 zugeordnetes Schaltelement (Relais) 16 mit der Fahrzeugbatterie 17 bzw. einer Notbatterie mit Strom versorgt wird. Sobald sich das Sperrelement 7 in seiner in der Fig. wiedergegebenen Entriegelungsstellung befindet, bei der das Sperrelement 7 nicht mehr zwischen die Zähne des Zahnkranzes 3 der Lenkspindel greift, und mit dem Zündschlüssel (nicht dargestellt) der Motor des entsprechenden Fahrzeuges gestartet wird, bewirkt die zentrale Steuervorrichtung 5 ein Umschalten des Schaltelementes 16 in die mit dem Pfeil 18 angedeutete Stellung. Die Verriegelungseinrichtung 4 ist nun "stromlos" geschaltet und der Elektromotor des Stellgliedes 6 kann auch bei einer Fehlschaltung innerhalb der Verriegelungseinrichtung 4 nicht mit Strom beaufschlagt und das Sperrelement 7 demnach nicht in seine Verriegelungsstellung verschoben werden.

Der in der Verriegelungseinrichtung 4 angeordnete Lagesensor 8 ist über eine zweite elektrische Leitung 19 direkt mit der zentralen Steuervorrichtung 5 verbunden. Bei einem Abschalten der Versorgungsspannung der Verriegelungseinrichtung 4 kann daher die Lage des Sperrelementes 7 weiterhin durch die zentrale Steuervorrichtung 5 überwacht werden.

Sollte es daher beispielsweise aufgrund einer mechanischen Beeinflussung (Gehäusebruch, Federbruch eines das Sperrelement sichernden Sicherungselementes etc.) zu einer auch nur geringen Verschiebung des Sperrelementes kommen, kann durch eine entsprechende Warnlampe oder einen Warnton der Fahrer zum sofortigen Halten des Fahrzeuges aufgefordert werden.

Bei Verwendung eines Hallsensors 8 als Lagesensor wird dieser zwar ebenfalls von Strom durchflossen, welcher von der zentralen Steuervorrichtung 5 geliefert wird, doch ist dieser Strom so niedrig, daß im Falle einer Fehlschaltung innerhalb der Verriegelungseinrichtung 4 eine Betätigung des Elektromotors durch diesen Strom ausgeschlossen ist.

Die Erfindung ist selbstverständlich nicht auf das vorstehend beschriebene Ausführungsbeispiel beschränkt. So kann beispielsweise der Sensor derart in der Verriegelungseinrichtung angeordnet werden, daß er nicht direkt die Lage des Sperrelementes überwacht, sondern die Stellung eines das Sperrelement in seiner Entriegelungsstellung sichernden Hilfselementes. Ferner können auch mehrere Sensoren innerhalb der Verriegelungseinrichtung angeordnet sein, die mehrere unterschiedlich vorgebbare Zustände der Verriegelungseinrichtung überwachen und zusätzlich durch die zentrale Steuervorrichtung überwacht werden.

### Bezugszeichenliste

- 1: Vorrichtung
- 2: Lenkspindel
- 3: Zahnkranz
- 4: Verriegelungseinrichtung
- 5: Steuervorrichtung
- 6: Stellglied
- 7: Sperrelement
- 8: Sensor, Lagesensor, Hallsensor
- 9: Schaltungseinrichtung
- 10,11: elektrische Leitungen
- 12: Interfacekarte, Baugruppe
- 13: Mikrocontroller, Baugruppe
- 14: Stromversorgungseinheit
- 15: elektrische Leitung
- 16: Schaltelement
- 17: Fahrzeugbatterie
- 18: Pfeil
- 19: zweite elektrische Leitung

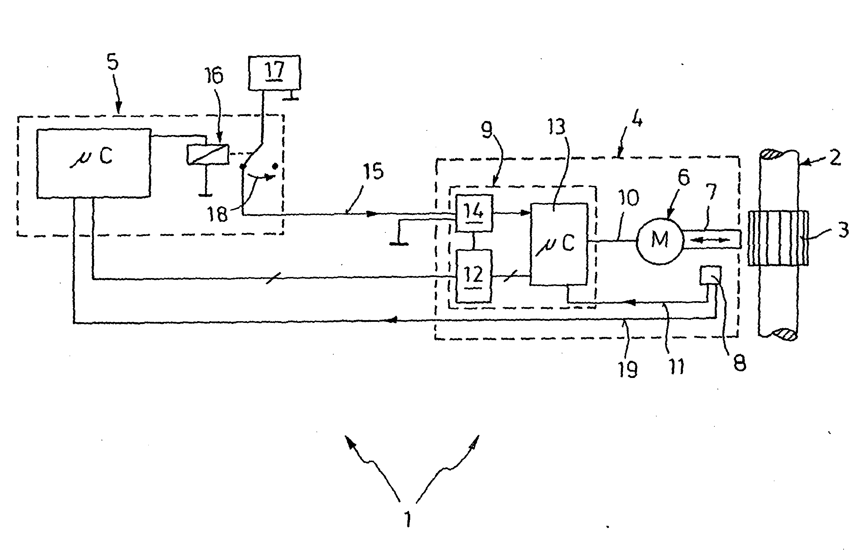

## Patentansprüche

1. Vorrichtung zur Verriegelung der Lenkspindel (2) einer Kraftfahrzeug-Lenkeinrichtung mit einer im Bereich der Lenkspindel (2) angeordneten Verriegelungseinrichtung (4) und einer mit dieser elektrisch verbundenen zentralen Steuervorrichtung (5), mit den Merkmalen:
a) die Verriegelungseinrichtung (4) umfaßt
ein elektrisches Stellglied (6) zur Verschiebung eines von der Ent- in die Verriegelungsstellung verschiebbar angeordneten Sperrelementes (7),
mindestens einen in bezug auf das Stellglied (6) separat angeordneten Sensor (8) zur Überwachung eines vorgebbaren Zustandes der Verriegelungseinrichtung (4),
eine elektronische Schaltungseinrichtung (9), die sowohl mit dem Stellglied (6) als auch mit dem Sensor (8) zur Verarbeitung der von diesem Sensor (8) während der Bestromung der elektronischen Schaltungseinrichtung kommenden, die Lage des Sperrelementes (7) charakteristischen Signale elektrisch verbunden ist;
b) die zentrale Steuervorrichtung (5) umfaßt ein Schaltelement (16), mittels dessen die Versorgungsspannung der Verriegelungseinrichtung (4) ein- und ausschaltbar ist, derart, daß die Verriegelungseinrichtung (4) während der Fahrt des entsprechenden Kraftfahrzeuges nicht an einer Versorgungsspannung anliegt, die zum Betrieb des elektrischen Stellgliedes (6) sowie der Schaltungseinrichtung (9) ausreicht;
c) der in der Verriegelungseinrichtung (4) angeordnete Sensor (8) ist über eine zweite elektrische Leitung (19) mit der zentralen Steuervorrichtung (5) verbunden, derart, daß die Steuervorrichtung (5) bei einem Abschalten der Versorgungsspannung der Verriegelungseinrichtung (4) den von dem Sensor (8) detektierbaren Zustand der Verriegelungseinrichtung (4) abfragen und auswerten kann.

2. Vorrichtung nach Anspruch 1, **dadurch gekennzeichnet, daß** der Sensor (8) derart in der Verriegelungseinrichtung (4) angeordnet ist, daß er die Lage des Sperrelementes (7) und/oder eines das Sperrelement (7) sichernden Sicherungselementes überwacht.

3. Vorrichtung nach Anspruch 1 oder 2, **dadurch gekennzeichnet, daß** es sich bei dem Sensor (8) um einen Hallsensor handelt.

4. Vorrichtung nach einem der Ansprüche 1 bis 3, **dadurch gekennzeichnet, daß** es sich bei dem elektrischen Stellglied (6) um einen Elektromotor mit nachgeschaltetem Getriebe handelt.

5. Vorrichtung nach einem der Ansprüche 1 bis 4, **dadurch gekennzeichnet, daß** die zentrale Steuervorrichtung (5) Prüfsignale erzeugt, mittels welcher zur Überprüfung der Funktion der Verriegelungseinrichtung (4) der Sensor (8) über die zweite elektrische Leitung (19) beaufschlagbar ist.

## Claims

1. Device for locking the steering shaft (2) of a steering system for a motor vehicle, with a locking mechanism (4) and a central control unit (5) electrically connected to this, located in the steering shaft region, with the characteristics:
a) the locking mechanism (4) consists of
an electrical actuator (6) for moving a moveable blocking element (7) from the unlocked into the locked position,
at least one separately assigned sensor (8) relating to the actuator (6), for monitoring a definable condition of the locking mechanism (4),
an electronic switching device (9), electrically connected to both the actuator (6) and the sensor (8), for the purpose of processing the characteristic signals for the blocking- element (7) position coming from the sensor (8), during the application of voltage to the switching device;
b) the central control unit (5) consists of a circuitry element (16), by which the supply voltage for the locking mechanism (4) can be switched on and off in such a way, that during operation of the relevant motor vehicle the locking mechanism (4) is not applied with a supply voltage that is sufficient for the operation of the actuator (6), as well as the switching device (9);
c) the Sensor (8) located in the locking mechanism (4) is connected with the central control unit (5) via a second electrical cable (19) in such a way, that, during the switching off of the supply voltage for the locking mechanism (4), the control unit (5) is able to query and evaluate the locking mechanism's (4) condition, which is detectable by the sensor (8).

2. The device according to Claim 1, **characterized in that** the sensor (8) is arranged within the locking mechanism (4) in such a way, that the position of the blocking element (7) and/or one of the blocking element's (7) securing elements is monitored.

3. The device according to Claim 1 or 2, **characterized in that** the sensor (8) in question is a Hall sensor.

4. The device according to Claims 1 through 3, **characterized in that** the electrical actuator (6) in question is an electric motor with downstream transmission.

5. The device according to Claims 1 through 4, **characterized in that** the central control unit (5) generates test signals, by which the sensor (8) can be actuated via the second electrical cable (19), for the purpose of testing the function of the locking mechanism (4).

## Revendications

1. Dispositif de verrouillage de l'arbre de direction (2) d'un dispositif de direction d'un véhicule automobile, avec un dispositif de verrouillage (4) disposé au niveau de l'arbre de direction (2) et avec, relié électriquement à ce dernier, un dispositif central de commande (5), selon les caractéristiques suivantes :
a) le dispositif de verrouillage (4) comprend
un actionneur électrique (6) servant au déplacement d'un élément de blocage (7) pouvant se mouvoir de la position de déverrouillage à la position de verrouillage,
au moins un capteur (8) disposé séparément de l'actionneur (6), et servant à surveiller un état pouvant être défini à l'avance pour le dispositif de verrouillage (4),
un dispositif de commutation électronique (9), relié électriquement aussi bien à l'actionneur (6) qu'au capteur (8), afin de traiter les signaux caractérisant la position de l'élément de blocage (7) et émis par ce capteur (8) lorsque le dispositif de commutation électronique est soumis à un courant ;
b) le dispositif central de commande (5) comprend un élément de commutation (16) au moyen duquel il est possible d'activer et désactiver la tension d'alimentation du dispositif de verrouillage (4), de façon que, pendant que le véhicule automobile concerné roule, le dispositif de verrouillage (4) ne soit pas soumis à une tension d'alimentation suffisante pour faire fonctionner l'actionneur électrique (6) ainsi que le dispositif de commutation (9) ;
c) le capteur (8) disposé dans le dispositif de verrouillage (4) est relié au dispositif central de commande (5) par un second câble électrique (19), de façon que, en cas de coupure de la tension d'alimentation du dispositif de verrouillage (4), le dispositif de commande (5) puisse consulter et analyser l'état que le capteur (8) peut détecter pour le dispositif de verrouillage (4).

2. Dispositif selon la revendication 1, **caractérisé en ce que** le capteur (8) est disposé dans le dispositif de verrouillage (4) de façon à surveiller la position de l'élément de blocage (7) et (ou) d'un élément de sûreté sécurisant l'élément de blocage (7).

3. Dispositif selon les revendications 1 ou 2, **caractérisé en ce que** le capteur (8) est un capteur à effet Hall.

4. Dispositif selon l'une des revendications 1 à 3, **caractérisé en ce que** l'actionneur électrique (6) est un moteur électrique à réducteur positionné en aval.

5. Dispositif selon l'une des revendications 1 à 4, **caractérisé en ce que** le dispositif central de commande (5) génère des signaux de test au moyen desquels le capteur (8) peut être sollicité via le deuxième câble électrique (19) afin de vérifier le fonctionnement du dispositif de verrouillage (4).
